# EUROPEAN PATENT SPECIFICATION

(11) **EP 3 514 086 B1**
(45) Date of publication and mention of the grant of the patent: **09.11.2022**
(21) Application number: 19152671.4
(22) Date of filing: 18.01.2019
(51) Int. Cl.: B65G 47/51, A24C 5/35, B65G 21/18, B65G 21/14

(54) **VARIABLE-CAPACITY STORE FOR CIGARETTES**
SPEICHER MIT VARIABLER KAPAZITÄT FÜR ZIGARETTEN
MAGASIN À CAPACITÉ VARIABLE POUR CIGARETTES

(30) Priority: 19.01.2018 IT 201800001487
(43) Date of publication of application: 24.07.2019
(73) Proprietor: G.D SOCIETA' PER AZIONI, 40133 Bologna (IT)
(72) Inventor: CALZOLARI, Luca, 40133 BOLOGNA (IT); FERRARI, Michele, 40064 OZZANO EMILIA (BO) (IT); FEDERICI, Luca, 40135 BOLOGNA (IT)
(74) Representative: Mangini, Simone

(56) References cited:
- EP-A1- 2 995 207
- DE-B- 1 124 584
- FR-A1- 2 766 803
- US-A1- 2011 315 513

## Description

### TECHNICAL FIELD

The present invention relates to a variable-capacity store for articles, in particular cylindrical articles of the tobacco processing industry.

### BACKGROUND OF THE INVENTION

In the tobacco processing industry variable-capacity stores for cigarettes, of the type described in patent EP581143, are known. Said stores comprise a variable-length storage path having two conveying portions wound around each other on a common axis with loops having the same inclination; and a deviation device, which is adapted to move the cigarettes from one portion to the other and is movable along both portions so as to vary the overall length of the storage path.

EP838165 discloses a variable-capacity store comprising two helical conveyors arranged one above the other and connected by an intermediate element adapted to transfer, only by gravity, the products from the upper conveyor to the lower conveyor. The two conveyors work pneumatically.

This type of store has several drawbacks, among which the following are mentioned.

The particular arrangement of the two conveying portions, located one inside the other, not only makes the structure and construction of the stores particularly complex and expensive but also significantly complicates the maintenance work. Moreover, the stores are not very ductile since it is not possible to provide input and output stations for cylindrical articles arranged in opposite positions (for example, one at the bottom and one at the top) and/or with variable length.

It should also be noted that the pneumatic conveyors (as described for example in EP838165) are relatively indelicate with the articles (in particular, the cigarettes). In fact, this type of conveyor can not only damage the articles with relative ease but can lead to the detachment and dispersion of particles (for example of tobacco) from the articles themselves.

It is also noted that a feeding, exclusively by gravity, of relatively delicate articles (such as the cigarettes) can lead to the damage of the articles and/or to the creation of blockage.

Known stores are relatively cumbersome and do not adapt to be positioned in spaces having a particular shape (in particular, long and narrow).

FR2766803 discloses an accumulator having two conveyors positioned parallel to each other and a mobile trolley positioned on each conveyor. These two trolleys are connected by a curved conveyor that forms an angle of about 180 degrees. The two trolleys and curved conveyor form an assembly that can be moved.

EP2995207 discloses a conveyor system comprising a channel for guiding a multi-layer stream of rod-like articles of the tobacco industry received from a conveyor of rod-like articles. The channel is adjusted to guide rod-like articles among conveyors situated one above the other and has at least two arch-shaped, inside and outside, walls.

US 2011/315513 A1 discloses a variable-capacity store for articles of the tobacco processing industry according to the preamble of claim 1. The object of the present invention is to provide a variable-capacity store, which allows to overcome, at least partially, the drawbacks of the prior art and is, at the same time, easy and inexpensive to produce.

### SUMMARY

In accordance with the present invention, a variable-capacity store is provided according to what is claimed in the following independent claim and, preferably, in any one of the claims directly or indirectly dependent on the aforementioned independent claim.

### BRIEF DESCRIPTION OF THE FIGURES

The present invention will now be described with reference to the accompanying drawings, which illustrate a non-limiting example of embodiment thereof, wherein:
- Figure 1 is a perspective view of a store according to the present invention;
- Figure 2 is a front view of a part of the store of Figure 1;
- Figure 3 is a front view of the store of Figure 1 in a different operating configuration; and
- Figure 4 is a front view of the store of Figure 1 in a different operating configuration.

### DETAILED DESCRIPTION

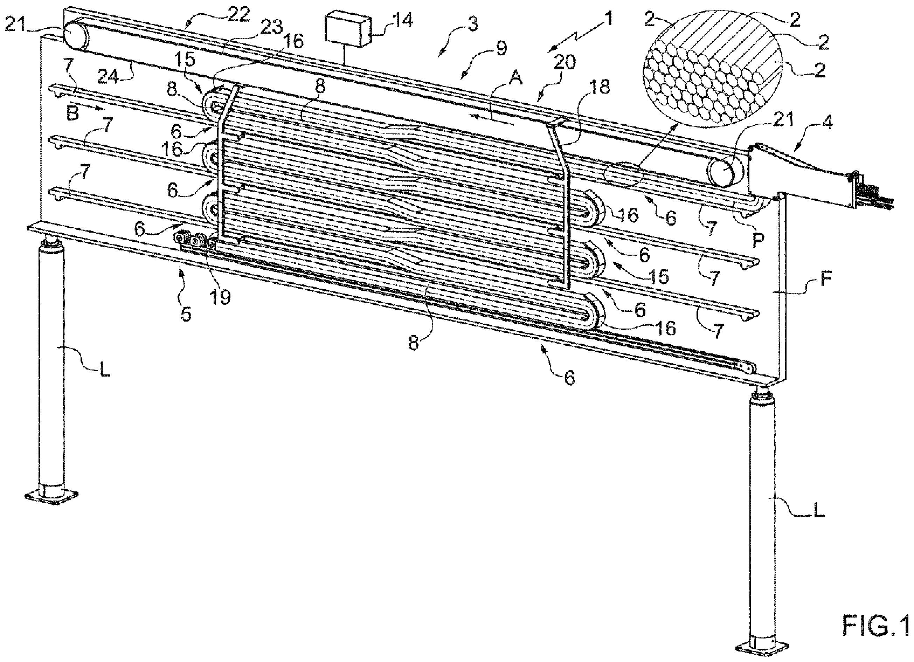

In Figure 1, 1 denotes as a whole a variable-capacity store for articles 2 of the tobacco processing industry, in particular substantially cylindrical articles (more in particular, cigarettes). The store 1 comprises a conveying system 3 to convey the articles 2 (in particular, a mass of articles 2) from an input station 4 to an output station 5 along a path P with a variable length.

It should be noted that, in particular, the store 1 is of the "first in, first out" type (FIFO)

The conveying system 3 comprises at least two conveying assemblies 6 (in particular, a plurality of conveying assemblies 6), each of which is adapted to convey the articles 2 along a respective segment of the path P and comprises a respective conveyor 7 and a respective conveyor 8.

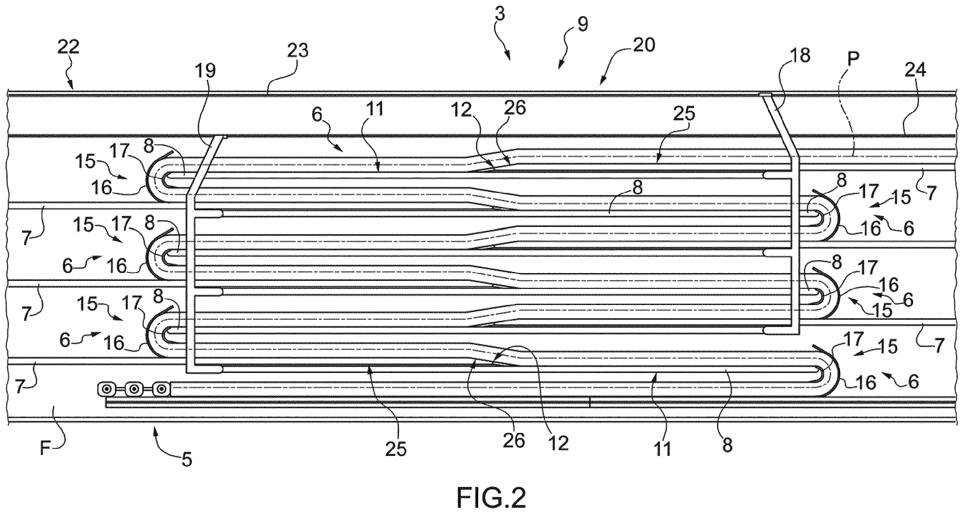

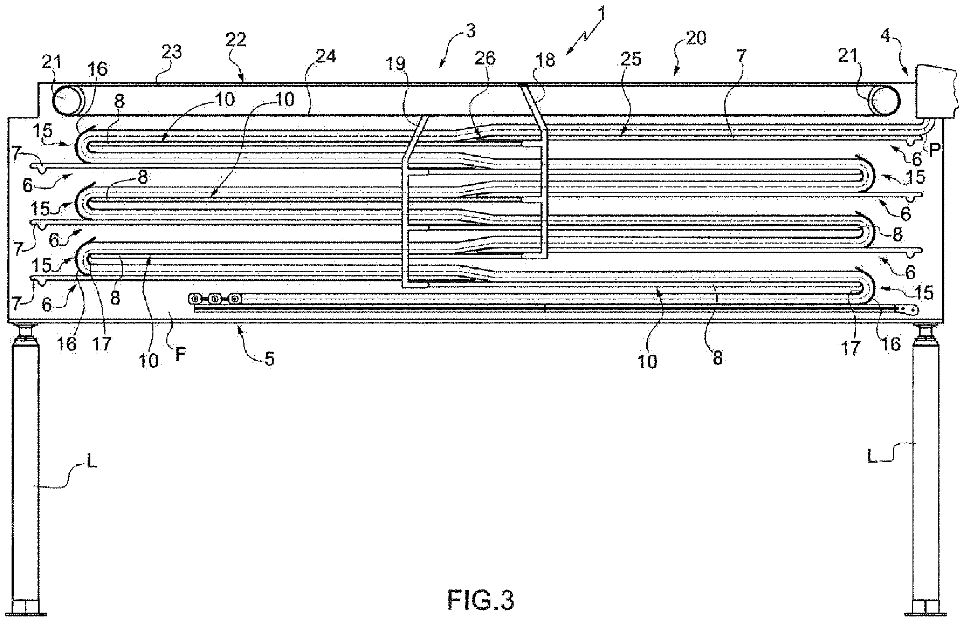

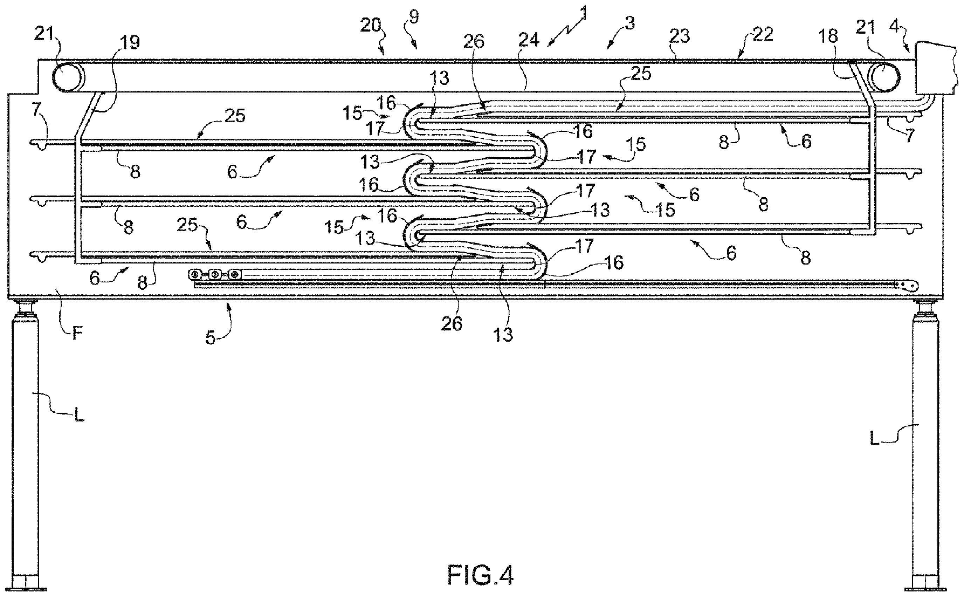

The conveying system 3 comprises, furthermore, at least one movement assembly 9 to move at least one between the conveyor 7 and the conveyor 8 (of the same conveying assembly 6) relative to each other between a first configuration (in particular illustrated in Figure 4), in which the conveyor 7 and the conveyor 8 (of the same conveying assembly 6) at least partially overlap each other, and a second configuration (in particular illustrated in Figure 3), in which the conveyor 8 has an active portion 10, which is staggered (not overlapping) with respect to the conveyor 7 (of the same conveying assembly 6), passing through at least one intermediate configuration (in particular illustrated in Figures 1 and 2), in which the conveyor 7 and the conveyor 8 (of the same conveying assembly of 6) partially overlap each other and the conveyor 8 has an active portion 11, which is staggered with respect to the conveyor 7 and is shorter than the active portion 10.

In particular, the movement assembly 9 is adapted to move at least one between the conveyor 7 and the conveyor 8 relative to each other from the first configuration to the second configuration so that the active portion (along which the articles 2 are conveyed) of the conveyor 8 increases (lengthens) .

According to some non-limiting embodiments, the movement assembly is adapted to move the conveyor 8 relative to the conveyor 7.

In particular, the conveying system 3 is structured (more precisely, two subsequent conveying assemblies 6 are structured) so that when the movement assembly 9 of a first conveying assembly 6 moves the conveyor 8 relative to the conveyor 7 from the first configuration to the second configuration the portion of the segment of the path P along the conveyor 7 of the second (subsequent) conveying assembly 6 extends.

In particular, the conveyor 7 has one end 12 arranged along the aforementioned respective segment and the active portions 10 and 11 extend from the end 12 beyond the conveyor 7 (in particular, along the path P, more precisely, along the respective segment).

In the first configuration (i.e. when the conveyors 7 and 8 are in the first configuration), the segment has a first length; in the second configuration (i.e. when the conveyors 7 and 8 are in the second configuration), the segment extends along (at least part of) the conveyor 7 and (at least part of) the active portion 10 (of the conveyor 8 of the same conveying assembly 6) and has a second length greater than the first length; in the intermediate configuration (i.e. when the conveyors 7 and 8 are in the intermediate configuration), the segment extends along (at least part of) the conveyor 7 and (at least part of) the active portion 11 (of the conveyor 8 of the same conveying assembly 6) and has a third length greater than the first length and lesser than the second length.

In particular, in use, the conveyor 7 feeds the articles 2 along a first part of the aforementioned segment of the path P up to the end 12. At this point, the articles 2 are transferred to the conveyor 8 (more precisely, the active portion, 10 or 11, of the conveyor 8), which feeds the articles 2 along a second part of said segment and transfers them, in turn, to the subsequent conveying assembly 6 (more precisely, to the conveyor 7 of the following conveying assembly 6).

It should be noted that, even while the articles 2 are fed along the segment of the path P, the movement assembly 9 can move (more precisely, translate) the conveyors 7 and 8 relative to each other (more precisely, the conveyor 8 relative to the conveyor 7). In this way, the length of the active portion of the conveyor 8 and therefore of the segment of the path P can be varied (thus modifying the capacity of the store 1) even while the articles 2 are fed along the segment of the path P.

According to some non-limiting embodiments (in particular as illustrated in the accompanying figures), also in the first configuration (Figure 4) the conveyor 8 has an active portion 13 staggered with respect to the conveyor 7 (more precisely, extending from the end 12 beyond the conveyor 7, in particular along the path P). In addition, or alternatively, also in the second configuration (Figure 3) the conveyor 7 and the conveyor 8 partially overlap each other.

It should be noted that the conveying system 3 has a considerably reduced dimension (in particular, frontal and vertical).

Advantageously but not necessarily, the (each) conveyor 7 is mounted in a substantially fixed manner (for example, on a frame F) and the movement assembly 9 is adapted to move the (each) conveyor 8 relative to the respective conveyor 7.

In this way, it is possible to keep the side dimension of the store 1 contained. In this regard, it should be noted that when both the conveyors 7 and 8 are movable, in order to obtain the same maximum capacity of the store 1 it is necessary to increase the width of the store 1 (to give the conveyors 7 enough moving space).

According to some non-limiting embodiments, the (each) conveyor 7 is arranged above the respective conveyor 8. This allows a more simple and efficient operation of the store 1 to be obtained.

Advantageously but not necessarily, the input station 4 is arranged in a higher position relative (above) the output station 5. In this way, the passage of the articles 2 from one conveying assembly 6 to the other (and possibly from each conveyor 7 to the respective conveyor 8) is facilitated (by using gravity).

According to some non-limiting embodiments, the store 1 further comprises a frame F (on which the conveying system 3 is mounted). Advantageously but not necessarily, the frame F comprises supports L (in particular, legs) to maintain the conveying system 3 at a given distance from the ground. In this way (also due to the compactness of the conveying system 3), it is possible to have the outlet station 5 raised off the ground at a desired height possibly compatible with the entry of a machine (for example, a cigarette packing machine) arranged downstream of the store 1.

According to some non-limiting embodiments, the store 1 (more precisely, the conveying system 3) further comprises at least one control unit 14 (schematically illustrated) adapted to adjust the speed of (each) conveyor 7, of (each) conveyor 8 and of movement assembly in a coordinated manner so as to keep the height of the mass of articles 2 substantially constant (in particular, along the path P).

More specifically, each conveyor 7 and each conveyor 8 comprise at least one respective operating motor (of a type known, per se, and not illustrated) which is separate from the other operating motors; the movement assembly 9 is provided with at least one moving motor (known, per se, and not illustrated) which is separate from the operating motors. Even more precisely, the control unit 14 is adapted to adjust the speed of each operating motor and of the moving motor in a coordinated manner so as to keep the height of the mass of articles 2 substantially constant (both in time and along the path P).

In particular, the control unit 14 is adapted to adjust the operation of the conveyors 7 and 8 (more precisely, of their operating motors) and of the movement assembly 9 (in particular, of its moving motor) so as to vary the capacity of the store 1 (and the quantity of articles 2 fed through the input and output stations 4 and 5) according to the needs of the machines (not illustrated - typically, a packing machine for articles 2 and a machine for producing articles 2) arranged downstream and upstream of the store 1. In particular, when the productivity of the machine arranged upstream of the store 1 is greater than the needs of the machine arranged downstream of the store 1, the control unit 14 consequently adjusts the speed of the conveyors 7 and 8 (so as to have a higher speed at the input station 4 and a lower speed at the output station 5) and actuates the movement assembly 9 so as to increase the capacity of the store 1 (by extending the active portion of at least one conveyor 8; more precisely, by lengthening the active portion of each conveyor 8) .

According to some non-limiting embodiments, the movement assembly 9 is adapted to move each conveyor 8 independently of the other conveyors 8. In these cases, the movement assembly 9 comprises a plurality of moving motors, each of which is adapted to translate a respective conveyor 8. Advantageously but not necessarily, the movement assembly 9 moves a plurality (all) of the conveyors 8 together. In these cases, in particular, the movement assembly 9 has a single moving motor.

According to some non-limiting embodiments, the conveyor 7 is adapted to feed the articles 2 at a first speed V1; the movement assembly 9 is adapted to move the conveyor 8 at a second speed V2; and the conveyor 8 is adapted to feed the articles 2 at a third speed V3. The control unit 14 is adapted to control the operation of the conveyor 7 so as to adjust the third speed V3 according to the difference between the first speed V1 and the second speed V2, in particular so that the third speed V3 is substantially equal to the difference between the first speed V1 and the second speed V2 (V3 = V1-V2) .

Note that in the present text for difference and/or sum of speed we mean a difference and/or a vector sum of speed (in other words, speeds are considered as vectors and the orientation thereof - direction - becomes relevant).

Advantageously but not necessarily, the (each) conveyor 7 (of a first conveying assembly 6 or of a first series of conveying assemblies 6) is a substantially linear conveyor and is adapted to feed the articles 2 in a direction A; the (each) conveyor 8 (of a first conveying assembly 6 or of a first series of conveying assemblies 6) is a substantially linear conveyor, which is adapted to feed the articles 2 in the direction A. The active portion (10, 11 and/or 13) of the conveyor 8 (the active portion 10 and the active portion 11) extends from the end 12 in the direction A. In particular, the movement assembly 9 is adapted to move (translate) the (each) conveyor 8 in the first direction A; more particularly, the movement assembly 9 is also adapted to move (translate) the conveyor 8 in a direction B (equal and) opposite to the direction A. In other words, the movement assembly 9 is also adapted to move (translate) the conveyor 8 forwards and backwards in the direction A.

According to some non-limiting embodiments, the conveying assemblies 6 comprise a first conveying assembly 6 and at least a second conveying assembly 6 (arranged in succession). The first conveying assembly 6 (for example, in Figure 1, the first one starting from the top) is adapted to feed the articles 2 in the direction A, the second conveying assembly 6 (for example, in Figure 1, the second starting from the top) is adapted to feed the articles 2 in a direction B, which is substantially opposite to the direction A.

Advantageously but not necessarily, the (each) conveyor 7 of the first conveying assembly 6 (or of a first series of conveying assemblies 6) is arranged staggered (and, in particular, fixed) with respect to the conveyor 7 (which is also mounted in a fixed manner) of the second conveying assembly 6 (or of a second series of conveying assemblies 6).

According to some non-limiting embodiments, the conveyor 7 of the first conveying assembly 6 is adapted to feed the articles 2 at a first speed V1; the movement assembly 9 is adapted to move the conveyor 8 of the first conveying assembly 6 at a second speed V2; the conveyor 8 of the first conveying assembly 6 is adapted to feed the articles 2 at a third speed V3; the conveyor 7 of the second conveying assembly 6 is adapted to feed the articles 2 at a fourth speed V4; the movement assembly 9 is adapted to move the conveyor 8 of the second conveying assembly 6 at a fifth speed V5; the conveyor 8 of the second conveying assembly 6 is adapted to feed the articles at a sixth speed V6.

Advantageously but not necessarily, the second and fifth speed V2 and V5 are substantially equal in absolute values (|V2|=|V5|). In particular, the second and fifth speed V2 and V5 are mutually opposite.

Advantageously but not necessarily, the control unit 14 is adapted to control the operation of the conveyor 7 so as to adjust the fourth speed V4 according to the sum of the third speed V3 and twice the second speed V2. In particular, the absolute value of the fourth speed V4 is substantially equal to the absolute value of the sum of the speed V3 and twice the second speed (|V4|=|V3+2×V2|). More specifically, the third speed V3 is opposite the fourth speed V4.

According to some non-limiting embodiments, the conveying system 3 comprises a plurality of (at least two) guide devices 15, each of which is adapted to enable the passage of the articles between two subsequent conveying assemblies 6 (each guide device 15 is arranged between two subsequent conveying assemblies) and diverts the articles 2 so as to define a curve of the path P. In particular, each guide device 15 comprises a curved guide 16 (more precisely, rigid) delimiting said curve on the outside and, more in particular, a curved guide 17 (more precisely, rigid) delimiting said curve on the inside. Even more in particular, the curve of the path is approximately 180°.

According to some non-limiting embodiments, the curved guide 16 comprises a first segment (arranged at the entrance of said curve) adapted to correct the speed of the articles 2 in order to avoid voids being formed within the mass of articles 2. In particular, said first segment of the curved guide 16 is provided with a vane adapted (shaped so as to push the articles 2 accordingly) to fill any voids (or holes) of the mass of articles 2 (and thus compacts the mass itself).

Advantageously but not necessarily, a system for adjusting the conveying speed (upstream and/or downstream of said curve) is also provided in order to guarantee a homogeneous conveying flow (i.e. a homogeneous mass of articles 2).

Advantageously but not necessarily, each guide device 15 is integral with a respective conveyor 8 and, in particular, is arranged at one end of said respective conveyor 8.

According to some non-limiting embodiments, the movement assembly 9 comprises a rigid element 18, in particular a rod, to which at least one conveyor 8 is connected in an integral manner (in particular, a plurality of conveyors 8). More precisely, the movement assembly 9 further comprises at least one rigid element 19, in particular a rod, to which at least one further conveyor 8 is connected (in particular, a plurality of further conveyors 8); and an actuator for moving the rigid elements 18 and 19, in particular in the direction A, respectively, in the direction B and vice versa, in particular in order to move the conveyor 8 and the additional conveyor 8 farther from and/or closer to each other.

More precisely, the movement assembly 9 (in particular, said actuator) comprises a conveyor 20 (in particular, a linear conveyor) having at least two pulleys 21 and a belt element 22 partially wound around the two pulleys 21 so as to have a first and a second branch 23 and 24 arranged from opposite sides of the pulleys 21. The rigid element 18 is connected to the branch 23. The rigid element 19 is connected to the branch 24. At least one of the pulleys 21 is connected to a moving motor adapted to impart a rotation motion to said pulley 21.

In particular, the belt element 22 comprises (is) a belt, a band/or a chain (and/or a similar element).

According to some non-limiting embodiments, the conveyors 7 and 8 are belt conveyors and, in particular, each comprise a respective belt, a respective band and/or a respective chain (and/or a similar element).

Advantageously but not necessarily, the conveyor 7 has a conveying portion 25 and a discharging portion 26 arranged between the conveying portion 25 and the end 12. The path P extends along the conveying portion 25, along the discharging portion 26 and beyond the end 12; the discharging portion 26 has an inclination ranging from 3° to 15° relative to the conveying portion 25.

According to some embodiments, the end 12 has a thickness ranging from 5 to 15 mm. In particular, the conveying portion 25 has a thickness ranging from 90 to 10.

## Claims

1. A variable-capacity store for articles (2) of the tobacco processing industry, in particular substantially cylindrical articles; the store (1) comprises a conveying system (3) to convey the articles (2) from an input station (4) to an output station (5) along a path (P) with a variable length;
the conveying system (3) comprises at least two conveying assemblies (6), each of which is adapted to convey the articles (2) along a respective segment of the path (P) and comprises a respective first conveyor (7) and a respective second conveyor (8); and at least one movement assembly (9) to move at least one between the first conveyor (7) and the second conveyor (8) relative to one another between a first configuration, in which the first conveyor (7) and the second conveyor (8) at least partially overlap each other, and a second configuration, in which the second conveyor (8) has a first active portion (10), which is staggered with respect to the first conveyor (7), going through at least one intermediate configuration, in which the first conveyor (7) and the second conveyor (8) at least partially overlap each other; the variable-capacity store being **characterized in that** in the intermediate configuration
the second conveyor (8) has a second active portion (11), which is staggered with respect to the first conveyor (7) and is shorter than the first active portion (10);
and **in that** in the first configuration, said segment of the path (P) has a first length; in the second configuration, said segment extends along at least part of the first conveyor (7) and at least part of the first active portion (10) and has a second length greater than the first length; in the intermediate configuration, said segment extends along at least part of the first conveyor (7) and at least part of the second active portion (11) and has a third length greater than the first length and smaller than the second length.

2. The store according to claim 1, wherein the movement assembly is adapted to move the second conveyor (8) relative to the respective first conveyor (7); the first conveyor (7) being mounted in a substantially fixed manner; the input station (4) is arranged in a higher position relative to the output station (5).

3. The store according to claim 1 or 2, wherein the conveying system (3) is adapted to convey a mass of said articles (2); the store (1) also comprises a control unit (14), which is adapted to adjust the speed of each first conveyor (7), of each second conveyor (8) and of the movement assembly (9) in a coordinated manner, so as to keep the height of the mass of articles (2) substantially constant along said path (P); for example, each first conveyor (7) and each second conveyor (8) comprise a respective operating motor, which is separate from the other operating motors; for example, the movement assembly (9) is provided with at least one moving motor, which is separate from the operating motors; for example, the control unit (14) is adapted to adjust the speed of each operating motor and of the moving motor in a coordinated manner, so as to keep the height of the mass of articles (2) substantially constant.

4. The store according to any one of the preceding claims, wherein the first conveyor (7) is arranged above the second conveyor (8); the first conveyor (7) has one end (12) arranged along said segment; the first active portion (10) and the second active portion (11) extend from the end (12) beyond the first conveyor (7); for example, the conveying system (3) is structured (more precisely, two subsequent conveying assemblies (6) are structured) so that when the movement assembly (9) of a first conveying assembly (6) moves the second conveyor (8) relative to the first conveyor (7) from the first configuration to the second configuration the portion of the segment of the path (P) along the conveyor (7) of the second (subsequent) conveying assembly (6) extends.

5. The store according to any one of the preceding claims, wherein the first conveyor (7) is a substantially linear conveyor, which is adapted to feed the articles (2) in a first direction (A); the second conveyor (8) is a substantially linear conveyor, which is adapted to feed the articles (2) in the first direction (A); the first conveyor (7) has one end (12) arranged along said segment; the first active portion (10) and the second active portion (11) extend from the end (12) in the first direction (A); for example, the movement assembly (9) is adapted to move the second conveyor (8) in the first direction (A) and in a second direction (B), which is opposite to the first direction (A).

6. The store according to any one of the preceding claims, wherein the first conveyor (7) is adapted to feed the articles (2) at a first speed; the movement assembly (9) is adapted to move the second conveyor (8) at a second speed; the second conveyor (8) is adapted to feed the articles (2) at a third speed; the store (1) comprising a control unit (14) adapted to control the operation of the second conveyor (8) so as to adjust the third speed according to the difference between the first and the second speed, for example, so that the third speed is substantially equal to the difference between the first and the second speed.

7. The store according to any one of the preceding claims, wherein the conveying assemblies (6) comprise a first conveying assembly and at least a second conveying assembly; the first conveying assembly is adapted to feed the articles (2) in a first direction (A), the second conveying assembly is adapted to feed the articles (2) in a second direction (B), which is substantially opposite to the first direction (A).

8. The store according to claim 7, wherein the first conveyor (7) of the first conveying assembly is staggered with respect to and is fixed relative to the first conveyor (7) of the second conveying assembly.

9. The store according to claim 7 or 8, wherein the first conveyor (7) of the first conveying assembly is adapted to feed the articles (2) at a first speed; the movement assembly (9) is adapted to move the second conveyor (8) of the first conveying assembly at a second speed; the second conveyor (8) of the first conveying assembly is adapted to feed the articles (2) at a third speed; the first conveyor (7) of the second conveying assembly is adapted to feed the articles (2) at a fourth speed; the movement assembly (9) is adapted to move the second conveyor (8) of the second conveying assembly at a fifth speed; the second conveyor (8) of the second conveying assembly is adapted to feed the articles (2) at a sixth speed; the second and fifth speed being substantially equal in absolute value; for example, the second and fifth speed are opposite to each other.

10. The store according to any one of the claims 7 to 9, wherein the first conveyor (7) of the first conveying assembly is adapted to feed the articles (2) at a first speed; the movement assembly (9) is adapted to move the second conveyor (8) of the first conveying assembly at a second speed; the second conveyor (8) of the first conveying assembly is adapted to feed the articles (2) at a third speed; the first conveyor (7) of the second conveying assembly is adapted to feed the articles (2) at a fourth speed; the movement assembly (9) is adapted to move the second conveyor (8) of the second conveying assembly at a fifth speed; the fourth speed (V4) being adjusted according to the sum of the third speed (V3) and twice the second speed (V2); for example, the fourth speed (V4) being substantially equal in absolute value to the sum of the third speed (V3) and twice the second speed (V2).

11. The store according to any one of the preceding claims, wherein the conveying system (3) comprises a plurality of guide devices (15), each of which is adapted to enable the passage of articles (2) between two subsequent conveying assemblies (6) and to divert the articles (2) so as to define a curve of the path (P); each guide device (15) comprises a first curved guide (16) delimiting said curve on the outside and, for example, a second curved guide (17) delimiting said curve on the inside; for example, the curve of the path (P) is approximately 180°.

12. The store according to claim 11, wherein each guide device (15) is integral with a respective second conveyor (8) and is arranged at one end of said respective second conveyor (8).

13. The store according to claim 11 or 12, wherein the curved guide (16) comprises a first stretch, arranged at the entrance of said curve and shaped so as to push at least some of the articles (2) so as to fill possible voids of the mass of articles (2) (in order to compact the mass itself).

14. The store according to any one of the preceding claims, wherein the movement assembly (9) comprises a first rigid element (18), for example a rod, to which at least one second conveyor (8) is connected in an integral manner; at least a second rigid element (19), for example a rod, to which at least one further second conveyor (8) is connected; and an actuator (20) to move the first and the second rigid element (18, 19), for example in the first and in the second direction (A, B), respectively.

15. The store according to claim 14, wherein the movement assembly (9) comprises a conveyor (20) having at least two pulleys (21) and a belt element (22) partially wound around the two pulleys (21) so as to have a first and a second branch (23, 24) arranged on opposite sides of the pulleys (21); the first rigid element (18) being connected to the first branch (23); the second rigid element (19) being connected to the second branch (24); at least one of the pulleys (21) being connected to a moving motor, which is adapted to impart a rotation motion to said pulley (21).

16. The store according to any one of the preceding claims, wherein the first conveyor (7) has one end (12), a conveying portion (25) and a discharging portion (26) arranged between the conveying portion (25) and the end (12); said path (P) extends along the conveying portion (25), along the discharging portion (26) and beyond the end (12); the discharging portion (26) has an inclination ranging from 3° to 15° relative to the conveying portion (25).

## Patentansprüche

1. Magazin mit variabler Kapazität für Artikel (2) der Tabakverarbeitungsindustrie, insbesondere für im Wesentlichen zylindrische Artikel; wobei das Magazin (1) ein Fördersystem (3) umfasst, um die Artikel (2) von einer Eingabestation (4) längs eines Pfads (P) mit einer variablen Länge zu einer Ausgabestation (5) zu fördern;
wobei das Fördersystem (3) umfasst: wenigstens zwei Förderanordnungen (6), wovon jede ausgelegt ist, um die Artikel (2) längs eines entsprechenden Segments des Pfads (P) zu fördern, und einen jeweiligen ersten Förderer (7) und einen jeweiligen zweiten Förderer (8) umfasst; und wenigstens eine Bewegungsanordnung (9), um wenigstens einen von dem ersten Förderer (7) und dem zweiten Förderer (8) relativ zueinander zwischen einer ersten Konfiguration, in der der erste Förderer (7) und der zweite Förderer (8) wenigstens teilweise einander überlappen, und einer zweiten Konfiguration, in der der zweite Förderer (8) einen ersten aktiven Abschnitt (10) hat, der in Bezug auf den ersten Förderer (7) versetzt ist, zu bewegen, wobei wenigstens eine Zwischenkonfiguration durchlaufen wird, in der der erste Förderer (7) und der zweite Förderer (8) wenigstens teilweise einander überlappen;
wobei das Magazin mit variabler Kapazität **dadurch gekennzeichnet ist, dass** in der Zwischenkonfiguration der zweite Förderer (8) einen zweiten aktiven Abschnitt (11) hat, der in Bezug auf den ersten Förderer (7) versetzt ist und kürzer als der erste aktive Abschnitt (10) ist;
und dadurch, dass in der ersten Konfiguration das Segment des Pfads (P) eine erste Länge hat; in der zweiten Konfiguration sich das Segment längs wenigstens eines Teils des ersten Förderers (7) und wenigstens eines Teils des ersten aktiven Abschnitts (10) erstreckt und eine zweite Länge hat, die größer als die erste Länge ist; wobei sich in der Zwischenkonfiguration das Segment längs wenigstens eines Teils des ersten Förderers (7) und wenigstens eines Teils des zweiten aktiven Abschnitts (11) erstreckt und eine dritte Länge hat, die größer als die erste Länge und kleiner als die zweite Länge ist.

2. Magazin nach Anspruch 1, wobei die Bewegungsanordnung ausgelegt ist, um den zweiten Förderer (8) relativ zu dem jeweiligen ersten Förderer (7) zu bewegen; wobei der erste Förderer (7) in einer im Wesentlichen fixierten Weise montiert ist; wobei die Eingabestation (4) in einer höheren Position relativ zu der Ausgabestation (5) angeordnet ist.

3. Magazin nach Anspruch 1 oder 2, wobei das Fördersystem (3) ausgelegt ist, um eine Masse der Artikel (2) zu fördern; wobei das Magazin (1) außerdem eine Steuereinheit (14) umfasst, die ausgelegt ist, um die Geschwindigkeit jedes ersten Förderers (7), jedes zweiten Förderers (8) und der Bewegungsanordnung (9) in einer koordinierten Weise anzupassen, um die Höhe der Masse der Artikel (2) längs des Pfads (P) im Wesentlichen konstant zu halten; wobei beispielsweise jeder erste Förderer (7) und jeder zweite Förderer (8) einen jeweiligen Betriebsmotor umfassen, der getrennt von den anderen Betriebsmotoren ist; wobei beispielsweise die Bewegungsanordnung (9) mit wenigstens einem Bewegungsmotor versehen ist, der von den Betriebsmotoren getrennt ist; wobei beispielsweise die Steuereinheit (14) ausgelegt ist, um die Drehzahl jedes Betriebsmotors und des Bewegungsmotors in einer koordinierten Weise anzupassen, um die Höhe der Masse der Artikel (2) im Wesentlichen konstant zu halten.

4. Magazin nach einem der vorhergehenden Ansprüche, wobei der erste Förderer (7) oberhalb des zweiten Förderers (8) angeordnet ist; wobei der erste Förderer (7) ein Ende (12) hat, das längs des Segments angeordnet ist; wobei sich der erste aktive Abschnitt (10) und der zweite aktive Abschnitt (11) von dem Ende (12) über den ersten Förderer (7) hinaus erstrecken; wobei beispielsweise das Fördersystem (3) so strukturiert ist (wobei genauer zwei aufeinanderfolgende Förderanordnungen (6) so strukturiert sind), dass dann, wenn die Bewegungsanordnung (9) einer ersten Förderanordnung (6) den zweiten Förderer (8) relativ zu dem ersten Förderer (7) von der ersten Konfiguration zu der zweiten Konfiguration bewegt, sich der Abschnitt des Segments des Pfads (P) längs des Förderers (7) der zweiten (nachfolgenden) Förderanordnung (6) erstreckt.

5. Magazin nach einem der vorhergehenden Ansprüche, wobei der erste Förderer (7) ein im Wesentlichen linearer Förderer ist, der ausgelegt ist, um die Artikel (2) in einer ersten Richtung (A) zuzuführen; wobei der zweite Förderer (8) ein im Wesentlichen linearer Förderer ist, der ausgelegt ist, um die Artikel (2) in der ersten Richtung (A) zuzuführen; wobei der erste Förderer (7) ein Ende (12) hat, das längs des Segments angeordnet ist; wobei sich der erste aktive Abschnitt (10) und der zweite aktive Abschnitt (11) von dem Ende (12) in der ersten Richtung (A) erstrecken; wobei beispielsweise die Bewegungsanordnung (9) ausgelegt ist, um den zweiten Förderer (8) in der ersten Richtung (A) und in einer zweiten Richtung (B), die entgegengesetzt zu der ersten Richtung (A) ist, zu bewegen.

6. Magazin nach einem der vorhergehenden Ansprüche, wobei der erste Förderer (7) ausgelegt ist, um die Artikel (2) mit einer ersten Geschwindigkeit zuzuführen; wobei die Bewegungsanordnung (9) ausgelegt ist, um den zweiten Förderer (8) mit einer zweiten Geschwindigkeit zu bewegen; wobei der zweite Förderer (8) ausgelegt ist, um die Artikel (2) mit einer dritten Geschwindigkeit zuzuführen; wobei das Magazin (1) eine Steuereinheit (14) umfasst, die ausgelegt ist, um den Betrieb des zweiten Förderers (8) so zu steuern, um die dritte Geschwindigkeit entsprechend der Differenz zwischen der ersten und der zweiten Geschwindigkeit einzustellen, so dass beispielsweise die dritte Geschwindigkeit im Wesentlichen gleich der Differenz zwischen der ersten und der zweiten Geschwindigkeit ist.

7. Magazin nach einem der vorhergehenden Ansprüche, wobei die Förderanordnungen (6) eine erste Förderanordnung und wenigstens eine zweite Förderanordnung umfassen; wobei die erste Förderanordnung ausgelegt ist, um die Artikel (2) in einer ersten Richtung (A) zuzuführen, wobei die zweite Förderanordnung ausgelegt ist, um die Artikel (2) in einer zweiten Richtung (B), die im Wesentlichen entgegengesetzt zu der ersten Richtung (A) ist, zuzuführen.

8. Magazin nach Anspruch 7, wobei der erste Förderer (7) der ersten Förderanordnung in Bezug auf den ersten Förderer (7) der zweiten Förderanordnung versetzt und feststehend ist.

9. Magazin nach Anspruch 7 oder 8, wobei der erste Förderer (7) der ersten Förderanordnung ausgelegt ist, um die Artikel (2) mit einer ersten Geschwindigkeit zuzuführen; wobei die Bewegungsanordnung (9) ausgelegt ist, um den zweiten Förderer (8) der ersten Förderanordnung mit einer zweiten Geschwindigkeit zu bewegen; wobei der zweite Förderer (8) der ersten Förderanordnung ausgelegt ist, um die Artikel (2) mit einer dritten Geschwindigkeit zuzuführen; wobei der erste Förderer (7) der zweiten Förderanordnung ausgelegt ist, um die Artikel (2) mit einer vierten Geschwindigkeit zuzuführen; wobei die Bewegungsanordnung (9) ausgelegt ist, um den zweiten Förderer (8) der zweiten Förderanordnung mit einer fünften Geschwindigkeit zu bewegen; wobei der zweite Förderer (8) der zweiten Förderanordnung ausgelegt ist, um die Artikel (2) mit einer sechsten Geschwindigkeit zuzuführen; wobei die zweite und die fünfte Geschwindigkeit im Betrag im Wesentlichen gleich sind; wobei beispielsweise die zweite und die fünfte Geschwindigkeit zueinander entgegengesetzt sind.

10. Magazin nach einem der Ansprüche 7 bis 9, wobei der erste Förderer (7) der ersten Förderanordnung ausgelegt ist, um die Artikel (2) mit einer ersten Geschwindigkeit zuzuführen; wobei die Bewegungsanordnung (9) ausgelegt ist, um den zweiten Förderer (8) der ersten Förderanordnung mit einer zweiten Geschwindigkeit zu bewegen; wobei der zweite Förderer (8) der ersten Förderanordnung ausgelegt ist, um die Artikel (2) mit einer dritten Geschwindigkeit zuzuführen; wobei der erste Förderer (7) der zweiten Förderanordnung ausgelegt ist, um die Artikel (2) mit einer vierten Geschwindigkeit zuzuführen; wobei die Bewegungsanordnung (9) ausgelegt ist, um den zweiten Förderer (8) der zweiten Förderanordnung mit einer fünften Geschwindigkeit zu bewegen; wobei die vierte Geschwindigkeit (V4) entsprechend der Summe aus der dritten Geschwindigkeit (V3) und dem Doppelten der zweiten Geschwindigkeit (V2) eingestellt wird; wobei beispielsweise die vierte Geschwindigkeit (V4) im Wesentlichen im Betrag gleich der Summe aus der dritten Geschwindigkeit (V3) und dem Doppelten der zweiten Geschwindigkeit (V2) ist.

11. Magazin nach einem der vorhergehenden Ansprüche, wobei das Fördersystem (3) mehrere Führungsvorrichtungen (15) umfasst, wovon jede ausgelegt ist, um die Passage von Artikeln (2) zwischen zwei aufeinanderfolgenden Förderanordnungen (6) zu ermöglichen und die Artikel (2) umzulenken, um eine Biegung des Pfads (P) zu definieren; wobei jede Führungsvorrichtung (15) eine erste gebogene Führung (16), die die Biegung an der Außenseite begrenzt, und beispielsweise eine zweite gebogene Führung (17), die die Biegung an der Innenseite begrenzt, umfasst; wobei beispielsweise die Biegung des Pfads (P) etwa 180° beträgt.

12. Magazin nach Anspruch 11, wobei jede Führungsvorrichtung (15) mit einem jeweiligen zweiten Förderer (8) integral ausgebildet ist und an einem Ende des jeweiligen zweiten Förderers (8) angeordnet ist.

13. Magazin nach Anspruch 11 oder 12, wobei die gebogene Führung (16) eine erste Ausdehnung umfasst, die an dem Eingang der Biegung angeordnet ist und so geformt ist, dass sie wenigstens einige der Artikel (2) schiebt, um mögliche Lücken in der Masse von Artikeln (2) zu füllen (um die Masse an sich zu verdichten).

14. Magazin nach einem der vorhergehenden Ansprüche, wobei die Bewegungsanordnung (9) ein erstes starres Element (18), beispielsweise eine Stange, mit dem wenigstens ein zweiter Förderer (8) in einer integrierten Weise verbunden ist; wenigstens ein zweites starres Element (19), beispielsweise eine Stange, mit dem wenigstens ein weiterer zweiter Förderer (8) verbunden ist; und einen Aktuator (20) zum Bewegen des ersten und des zweiten starren Elements (18, 19), beispielsweise in der ersten bzw. in der zweiten Richtung (A, B) umfasst.

15. Magazin nach Anspruch 14, wobei die Bewegungsanordnung (9) einen Förderer (20), der wenigstens zwei Umlenkrollen (21) und ein Riemenelement (22), das teilweise um die zwei Umlenkrollen (21) gewunden ist, um eine erste und eine zweite Verzweigung (23, 24) zu haben, die an gegenüberliegenden Seiten der Umlenkrollen (21) angeordnet sind, umfasst; wobei das erste starre Element (18) mit der ersten Verzweigung (23) verbunden ist; das zweite starre Element (19) mit der zweiten Verzweigung (24) verbunden ist; wobei wenigstens eine der Umlenkrollen (21) mit einem Bewegungsmotor verbunden ist, der ausgelegt ist, um der Umlenkkrolle (21) eine Drehbewegung zu vermitteln.

16. Magazin nach einem der vorhergehenden Ansprüche, wobei der erste Förderer (7) ein Ende (12), einen Förderabschnitt (25) und einen Ausgabeabschnitt (26), der zwischen dem Förderabschnitt (25) und dem Ende (12) angeordnet ist, hat; wobei sich der Pfad (P) längs des Förderabschnitts (25), längs des Ausgabeabschnitts (26) und über das Ende (12) hinaus erstreckt; wobei der Ausgabeabschnitt (26) eine Neigung im Bereich von 3° bis 15° relativ zu dem Förderabschnitt (25) hat.

## Revendications

1. Dispositif de stockage à capacité variable pour des articles (2) de l'industrie de transformation du tabac, en particulier des articles sensiblement cylindriques ; le dispositif de stockage (1) comprend un système de transport (3) pour transporter les articles (2) d'un poste d'entrée (4) à un poste de sortie (5) le long d'un chemin (P) de longueur variable ; le système de transport (3) comprend au moins deux ensembles de transport (6), dont chacun est adapté pour transporter les articles (2) le long d'un segment respectif du chemin (P) et comprend un premier transporteur (7) respectif et un deuxième transporteur (8) respectif ; et au moins un ensemble de déplacement (9) pour déplacer au moins un parmi le premier transporteur (7) et le deuxième transporteur (8) l'un par rapport à l'autre entre une première configuration dans laquelle le premier transporteur (7) et le deuxième transporteur (8) se chevauchent au moins partiellement, et une deuxième configuration dans laquelle le deuxième transporteur (8) a une première portion active (10) qui est décalée par rapport au premier transporteur (7), en passant par au moins une configuration intermédiaire dans laquelle le premier transporteur (7) et le deuxième transporteur (8) se chevauchent au moins partiellement ; le dispositif de stockage à capacité variable étant **caractérisé en ce que**, dans la configuration intermédiaire, le deuxième transporteur (8) a une deuxième portion active (11) qui est décalée par rapport au premier transporteur (7) et qui est plus courte que la première portion active (10) ; et **en ce que**, dans la première configuration, ledit segment du chemin (P) a une première longueur ; dans la deuxième configuration, ledit segment s'étend le long d'au moins une partie du premier transporteur (7) et d'au moins une partie de la première portion active (10) et a une deuxième longueur supérieure à la première longueur ; dans la configuration intermédiaire, ledit segment s'étend le long d'au moins une partie du premier transporteur (7) et d'au moins une partie de la deuxième portion active (11) et a une troisième longueur supérieure à la première longueur et inférieure à la deuxième longueur.

2. Dispositif de stockage selon la revendication 1, dans lequel l'ensemble de déplacement est adapté pour déplacer le deuxième transporteur (8) par rapport au premier transporteur (7) respectif ; le premier transporteur (7) étant monté de manière sensiblement fixe ; le poste d'entrée (4) est agencé dans une position plus élevée par rapport au poste de sortie (5).

3. Dispositif de stockage selon la revendication 1 ou 2, dans lequel le système de transport (3) est adapté pour transporter une masse desdits articles (2) ; le dispositif de stockage (1) comprend également une unité de commande (14) qui est adaptée pour régler la vitesse de chaque premier transporteur (7), de chaque deuxième transporteur (8) et de l'ensemble de déplacement (9) d'une manière coordonnée, de façon à maintenir la hauteur de la masse d'articles (2) sensiblement constante le long dudit chemin (P) ; par exemple, chaque premier transporteur (7) et chaque deuxième transporteur (8) comprennent un moteur d'actionnement respectif qui est séparé des autres moteurs d'actionnement ; par exemple, l'ensemble de déplacement (9) est pourvu d'au moins un moteur mobile qui est séparé des moteurs d'actionnement ; par exemple, l'unité de commande (14) est adaptée pour régler la vitesse de chaque moteur d'actionnement et du moteur mobile d'une manière coordonnée, de façon à maintenir la hauteur de la masse d'articles (2) sensiblement constante.

4. Dispositif de stockage selon l'une quelconque des revendications précédentes, dans lequel le premier transporteur (7) est agencé au-dessus du deuxième transporteur (8) ; le premier transporteur (7) a une extrémité (12) agencée le long dudit segment ; la première portion active (10) et la deuxième portion active (11) s'étendent depuis l'extrémité (12) au-delà du premier transporteur (7) ; par exemple, le système de transport (3) est structuré (plus précisément, deux ensembles de transport (6) successifs sont structurés) de sorte que lorsque l'ensemble de déplacement (9) d'un premier ensemble de transport (6) déplace le deuxième transporteur (8) par rapport au premier transporteur (7) de la première configuration à la deuxième configuration, la portion du segment du chemin (P) le long du transporteur (7) du deuxième ensemble de transport (6) (successif) s'étend.

5. Dispositif de stockage selon l'une quelconque des revendications précédentes, dans lequel le premier transporteur (7) est un transporteur sensiblement linéaire qui est adapté pour alimenter les articles (2) dans une première direction (A) ; le deuxième transporteur (8) est un transporteur sensiblement linéaire, qui est adapté pour alimenter les articles (2) dans la première direction (A) ; le premier transporteur (7) a une extrémité (12) agencée le long dudit segment ; la première portion active (10) et la deuxième portion active (11) s'étendent depuis l'extrémité (12) dans la première direction (A) ; par exemple, l'ensemble de déplacement (9) est adapté pour déplacer le deuxième transporteur (8) dans la première direction (A) et dans une deuxième direction (B) , qui est opposée à la première direction (A).

6. Dispositif de stockage selon l'une quelconque des revendications précédentes, dans lequel le premier transporteur (7) est adapté pour alimenter les articles (2) à une première vitesse ; l'ensemble de déplacement (9) est adapté pour déplacer le deuxième transporteur (8) à une deuxième vitesse ; le deuxième transporteur (8) est adapté pour alimenter les articles (2) à une troisième vitesse ; le dispositif de stockage (1) comprenant une unité de commande (14) adaptée pour commander le fonctionnement du deuxième transporteur (8) de façon à régler la troisième vitesse selon la différence entre la première et la deuxième vitesse, par exemple, de sorte que la troisième vitesse soit sensiblement égale à la différence entre la première et la deuxième vitesse.

7. Dispositif de stockage selon l'une quelconque des revendications précédentes, dans lequel l'ensembles de transport (6) comprennent un premier ensemble de transport et au moins un deuxième ensemble de transport ; le premier ensemble de transport est adapté pour alimenter les articles (2) dans une première direction (A), le deuxième ensemble de transport est adapté pour alimenter les articles (2) dans une deuxième direction (B) qui est sensiblement opposée à la première direction (A).

8. Dispositif de stockage selon la revendication 7, dans lequel le premier transporteur (7) du premier ensemble de transport est décalé par rapport au premier transporteur (7) du deuxième ensemble de transport et est fixe par rapport à celui-ci.

9. Dispositif de stockage selon la revendication 7 ou 8, dans lequel le premier transporteur (7) du premier ensemble de transport est adapté pour alimenter les articles (2) à une première vitesse ; l'ensemble de déplacement (9) est adapté pour déplacer le deuxième transporteur (8) du premier ensemble de transport à une deuxième vitesse ; le deuxième transporteur (8) du premier ensemble de transport est adapté pour alimenter les articles (2) à une troisième vitesse ; le premier transporteur (7) du deuxième ensemble de transport est adapté pour alimenter les articles (2) à une quatrième vitesse ; l'ensemble de déplacement (9) est adapté pour déplacer le deuxième transporteur (8) du deuxième ensemble de transport à une cinquième vitesse ; le deuxième transporteur (8) du deuxième ensemble de transport est adapté pour alimenter les articles (2) à une sixième vitesse ; la deuxième et la cinquième vitesse étant sensiblement égales en valeur absolue ; par exemple, la deuxième et la cinquième vitesse sont opposées l'une à l'autre.

10. Dispositif de stockage selon l'une quelconque des revendications 7 à 9, dans lequel le premier transporteur (7) du premier ensemble de transport est adapté pour alimenter les articles (2) à une première vitesse ; l'ensemble de déplacement (9) est adapté pour déplacer le deuxième transporteur (8) du premier ensemble de transport à une deuxième vitesse ; le deuxième transporteur (8) du premier ensemble de transport est adapté pour alimenter les articles (2) à une troisième vitesse ; le premier transporteur (7) du deuxième ensemble de transport est adapté pour alimenter les articles (2) à une quatrième vitesse ; l'ensemble de déplacement (9) est adapté pour déplacer le deuxième transporteur (8) du deuxième ensemble de transport à une cinquième vitesse ; la quatrième vitesse (V4) étant réglée selon la somme de la troisième vitesse (V3) et de deux fois la deuxième vitesse (V2) ; par exemple, la quatrième vitesse (V4) étant sensiblement égale en valeur absolue à la somme de la troisième vitesse (V3) et deux fois la deuxième vitesse (V2).

11. Dispositif de stockage selon l'une quelconque des revendications précédentes, dans lequel le système de transport (3) comprend une pluralité de dispositifs de guidage (15), dont chacun est adapté pour permettre le passage d'articles (2) entre deux ensembles de transport (6) successifs et pour dévier les articles (2) de façon à définir une courbe du chemin (P) ; chaque dispositif de guidage (15) comprend un premier guide courbe (16) délimitant ladite courbe à l'extérieur et, par exemple, un deuxième guide courbe (17) délimitant ladite courbe à l'intérieur ; par exemple, la courbe du chemin (P) est approximativement de 180°.

12. Dispositif de stockage selon la revendication 11, dans lequel chaque dispositif de guidage (15) est solidaire d'un deuxième transporteur (8) respectif et est agencé à une extrémité dudit deuxième transporteur (8) respectif.

13. Dispositif de stockage selon la revendication 11 ou 12, dans lequel le guide courbe (16) comprend un premier tronçon, agencé à l'entrée de ladite courbe et conformé de façon à pousser au moins certains des articles (2) de façon à remplir les éventuels vides de la masse d'articles (2) (afin de compacter la masse elle-même).

14. Dispositif de stockage selon l'une quelconque des revendications précédentes, dans lequel l'ensemble de déplacement (9) comprend un premier élément rigide (18), par exemple une tige, auquel au moins un deuxième transporteur (8) est connecté en un seul tenant ; au moins un deuxième élément rigide (19), par exemple une tige, auquel au moins un deuxième transporteur (8) supplémentaire est connecté ; et un actionneur (20) pour déplacer le premier et le deuxième élément rigide (18, 19), par exemple dans la première et dans la deuxième direction (A, B), respectivement.

15. Dispositif de stockage selon la revendication 14, dans lequel l'ensemble de déplacement (9) comprend un transporteur (20) ayant au moins deux poulies (21) et un élément de courroie (22) partiellement enroulé autour des deux poulies (21) de façon à avoir une première et une deuxième branche (23, 24) agencées sur des côtés opposés des poulies (21); le premier élément rigide (18) étant connecté à la première branche (23) ; le deuxième élément rigide (19) étant connecté à la deuxième branche (24) ; au moins une des poulies (21) étant connectée à un moteur mobile qui est adapté pour donner un mouvement de rotation à ladite poulie (21).

16. Dispositif de stockage selon l'une quelconque des revendications précédentes, dans lequel le premier transporteur (7) a une extrémité (12), une portion de transport (25) et une portion de déchargement (26) agencée entre la portion de transport (25) et l'extrémité (12) ; ledit chemin (P) s'étend le long de la portion de transport (25), le long de la portion de déchargement (26) et au-delà de l'extrémité (12) ; la portion de déchargement (26) a une inclinaison allant de 3° à 15° par rapport à la portion de transport (25).
